# EUROPEAN PATENT SPECIFICATION

(11) **EP 1 876 333 B1**
(45) Date of publication and mention of the grant of the patent: **11.09.2013**
(21) Application number: 06731853.5
(22) Date of filing: 14.04.2006
(51) Int. Cl.: F02B 37/24, F02B 37/00, F02B 37/12, F02D 23/00

(54) **VARIABLE VANE TYPE TURBO CHARGER CONTROL DEVICE**
VARIABLE TURBOLADERSTEUERVORRICHTUNG MIT FLÜGELN
DISPOSITIF DE COMMANDE D'UN TURBOCOMPRESSEUR DE TYPE A AUBE VARIABLE

(30) Priority: 15.04.2005 JP 2005118683
(43) Date of publication of application: 09.01.2008
(73) Proprietor: KABUSHIKI KAISHA TOYOTA JIDOSHOKKI, Kariya-shi, Aichi 448-8671 (JP); TOYOTA JIDOSHA KABUSHIKI KAISHA, Toyota-shi, Aichi-ken, 471-8571 (JP)
(72) Inventor: TAKEUCHI, Masato, Kariya-shi, Aichi-ken, 448-8671 (JP); HOSAKI, Hitoshi, Toyota-shi, Aichi-ken, 471-8571 (JP)
(74) Representative: TBK
(86) International application number: PCT/JP2006/307917
(87) International publication number: WO 2006/112385

(56) References cited:
- EP-A- 1 195 506
- JP-A- 2000 205 055
- JP-A- 2001 221 076
- JP-A- 2002 371 919
- JP-A- 2004 150 400
- JP-A- 2005 048 743

## Description

The present invention relates to a controller for a turbocharger of a variable vane type, which is referred to also as a variable nozzle (VN) type or a variable displacement type.

Conventionally, a controller for a variable vane turbocharger operates in accordance with a command value of the opening degree of a variable vane (referred to also as the VN opening degree). Such command value is adapted to the engine speed and the engine load (the fuel injection amount) of a stationary state in which the temperature and the pressure in the internal combustion engine are stable. The command value is determined based on the result of computation involving a base opening degree (a basic VN opening degree) calculated in accordance with a map using the engine speed and the engine load as parameters and a supercharging pressure feedback amount obtained in the PID control, regardless of whether the engine is in the stationary state or a transient state.

Also, in a controller for a variable vane turbocharger described, for example, in Patent Document 1, if it is determined that the engine is in a transient state, the opening degree of a variable vane is controlled in accordance with a final target opening degree determined in correspondence with the deviation between a target value and an actual value of the air intake amount detected by an air mass flow sensor.

The above-described conventional controller for the variable vane turbocharger has the following disadvantages with regard to response of acceleration (rise of supercharging pressure). That is, feedback control of supercharging pressure is restricted to a specific range of the VN opening degree in order to prevent erroneous learning. Thus, at an initial stage of acceleration in a rapidly accelerating state, or a transient state, the variable vane must be controlled in accordance with the base opening degree. Further, when the engine is in the transient state, the exhaust pressure and the exhaust temperature are low and the air intake amount is small compared to a stationary state. In this state, the optimal point of supercharging efficiency corresponds to an opening degree of the variable vane that is smaller than a value in the stationary state. However, through the feedback control of supercharging pressure, the opening degree of the variable vane cannot be set to an optimal value at the initial stage of acceleration. This hampers improvement of response of supercharging.

As has been described, the controller of Document JP 2001-003757 controls the opening degree of the variable vane in accordance with the final target opening degree, which is obtained in correspondence with the deviation between the target value and the actual value of the air intake amount detected by the air mass flow sensor. Since such control is performed in a feedback manner, it is difficult to optimize the VN opening degree with respect to the response of supercharging, due to the necessity of ensuring reliable control.

Document EP 1 195 506 A1 discloses a controller for a variable vane turbocharger. The variable vane opening degree is set in accordance with an exhaust energy determined from the air intake and the air fuel injection amount. In particular, when an overboost occurs, the variable vane opening degree is set in a different manner from the normal state, so that the supercharging pressure is decreased.

Document JP 2005-048743 discloses that, if a transient period occurs, weighted average computations of detection values of an exhaust gas flow rate and a pressure difference are performed in steps. The detection values are the fresh air quantity that flows into a cylinder and a fuel injection quantity that is injected into the cylinder. These values are multiplied with the engine rotation speed to determine an exhaust gas flow rate. An opening degree of a variable nozzle is determined on the basis of a target exhaust gas flow to obtain a target EGR rate.

It is the object of the invention to provide a controller for a variable vane turbocharger capable of reducing a deviation between an axial boost pressure and a target boost pressure in a transient state faster than when the engine is in a normal state.

The object of the invention is achieved by a controller for a variable vane turbocharger according to claim 1. Advantageous embodiments are carried out according to the dependent claims.

The present invention provides a controller for a variable vane turbocharger. The turbocharger includes a turbine arranged in an exhaust passage of an internal combustion engine of a vehicle, a compressor that is provided in an intake passage of the engine and supplies air to the engine in correspondence with drive torque produced by the turbine, and a variable vane that selectively opens and closes to change the flow rate of exhaust gas that drives the turbine. The controller includes transient state determining means that determines whether the engine is in a transient state, and VN opening degree setting means. When the transient state determining means determines that the engine is in the transient state, the VN opening degree setting means sets a VN opening degree command value in correspondence with exhaust energy determined in correspondence with an air intake amount representing a flow rate of the exhaust gas and a fuel injection amount. The opening degree of the variable vane is controlled in correspondence with the VN opening degree command value set by the VN opening degree setting means.
Fig. 1 is a view representing the structure of a main portion of a diesel engine according to one embodiment of the present invention;
Fig. 2 is a flowchart representing a VN opening degree control procedure;
Fig. 3 is a diagram representing a calculation method of a procedure for calculating the target VN opening degree in a stationary state;
Fig. 4 is a graph representing correlation between the engine load and the target supercharging pressure;
Fig. 5 is a map representing the maximum VN opening degree when an EGR valve is fully closed;
Fig. 6 is a map representing the maximum VN opening degree when the EGR valve is fully open;
Fig. 7 is a map representing the basic VN opening degree;
Fig. 8 is a graph representing correlation between the opening degree of the EGR valve and the maximum VN opening degree;
Fig. 9 is a graph representing correlation between the engine speed and the minimum VN opening degree;
Fig. 10 is a diagram representing a calculation method of a procedure for calculating the target VN opening degree in a transient state; and
Fig. 11 is a diagram representing a modification of the calculation method of the procedure for calculating the target VN opening degree in the transient state.

An embodiment of the present invention will now be described. A controller according to the illustrated embodiment controls a variable vane turbocharger used in a diesel engine of an automobile as an internal combustion engine.

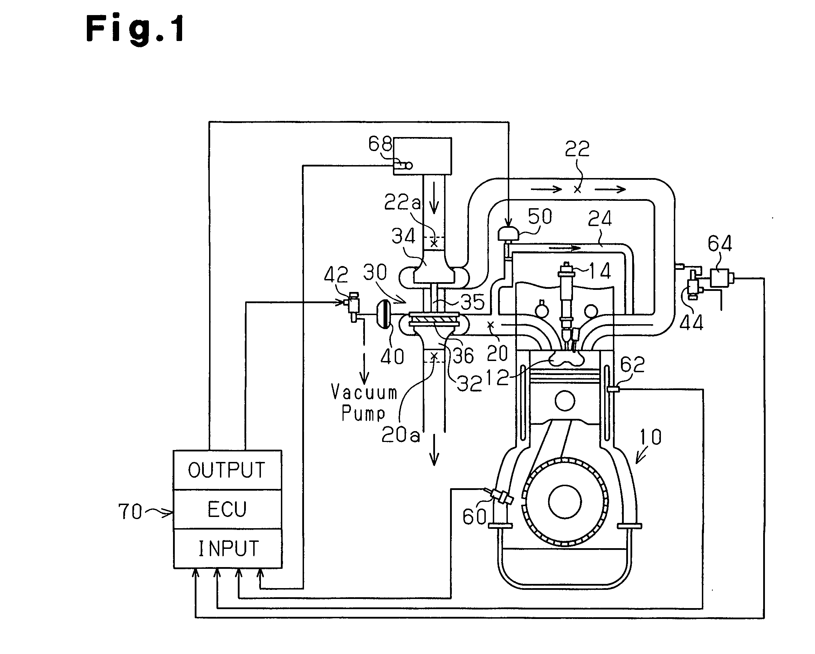

The configuration of the diesel engine will first be explained. Fig. 1 shows the structure of a main portion of the diesel engine.

As shown in Fig. 1, an exhaust passage 20 communicating with an exhaust port and an intake passage 22 communicating with an intake port are connected to an engine body 10 of the diesel engine. A fuel injection nozzle 14 is arranged in a combustion chamber 12 of the engine body 10. Fuel is injected from the fuel injection nozzle 14 into the combustion chamber 12 by the amount corresponding to the depression amount of the accelerator pedal (not shown) of the vehicle.

A variable vane turbocharger 30, or supercharging pressure adjustment means, is mounted in the engine body 10. The turbocharger 30 has a housing (not shown) having an exhaust passage portion 20a and an intake passage portion 22a, which form a portion of the exhaust passage 20 and a portion of the intake passage 22, respectively. The housing accommodates a rotor (not indicated by a reference numeral) including a turbine 32 arranged in the exhaust passage portion 20a and a compressor 34 provided in the intake passage portion 22a. The turbine 32 and the compressor 34 are connected together by a rotor shaft 35.

The turbine 32 of the turbocharger 30 is rotated by exhaust gas exhausted from the engine body 10 into the exhaust passage 20, thus rotating the compressor 34. This increases the amount of the air sent to the combustion chamber 12 of the engine body 10 to supercharge the intake passage 22. The output of the engine is thus improved. Specifically, when the exhaust gas is discharged from the engine body 10 to the exhaust passage 20, the rotary torque corresponding to the energy of the exhaust gas is applied to the compressor 34 through the turbine 32. The compressor 34 is thus actuated to send the air at a predetermined level of pressure (supercharging pressure) to the intake passage 22 located at a downstream side of the compressor 34, which is a portion of the intake system of the engine body 10.

A plurality of variable vanes 36, which selectively open and close to change the flow rate of the exhaust gas in the turbine 32, are provided in a portion of the housing at the side corresponding to the turbine 32. The variable vanes 36 are arranged along the outer circumference of the rotor (not shown) and operated by an actuator 40. The actuator 40 is connected to a vacuum pump (not shown), or a negative pressure source, through a vacuum regulating valve (VRV) 42. The VRV 42 adjusts the negative pressure supplied by the vacuum pump. The actuator 40 is thus actuated to operate each of the variable vanes 36 to selectively increase and decrease the opening degree of the variable vanes 36.

In this manner, the opening degree (hereinafter, referred to also as the VN opening degree) of the variable vanes 36 is changed. This adjusts the flow rate of the exhaust gas passing through the turbine 32 and changes the supercharging pressure in the intake passage 22. For example, if the variable vanes 36 are operated to decrease the opening degree, the drive force of the compressor 34 is increased and the supercharging pressure is raised. If the variable vanes 36 are operated to increase the opening degree, the drive force of the compressor 34 is decreased and the supercharging pressure is lowered.

A portion of the exhaust passage 20 upstream from the turbine 32 and a portion of the intake passage 22 downstream from the compressor 34 are connected to each other through an exhaust recirculation line 24. An EGR valve (an adjustment valve) 50 is provided in the exhaust recirculation line 24 and controls the communication state of the exhaust recirculation line 24. An actuator (not shown) operates the EGR valve 50 to selectively increase and decrease the opening degree of the EGR valve 50. When the EGR valve 50 is held in an open state, some of the exhaust gas is circulated from the exhaust passage 20 to the intake passage 22 through the exhaust recirculation line 24. When the EGR valve 50 is held in a closed state, circulation of the exhaust gas through the exhaust recirculation line 24 is stopped.

Various types of detection means are provided in the engine body 10 and detect the load and the operating conditions of the engine body 10. Specifically, the engine body 10 includes an engine speed sensor 60 detecting the engine speed N of the engine, an engine coolant temperature sensor 62 detecting the coolant temperature Tw of the engine, and a vehicle speed sensor (not shown). A supercharging/atmospheric pressure sensor 64 is provided in the intake passage 22, which is downstream from the compressor 34, through a vacuum switching valve (VSV) 44. The supercharging/atmospheric pressure sensor 64 detects the supercharging pressure Pb and the atmospheric pressure Pa of the engine in response to switching of the VSV 44. An atmospheric temperature sensor 68, which detects the atmospheric temperature Ta, is arranged in a portion of the intake passage 22 upstream from the compressor 34.

The engine speed sensor 60, the engine coolant temperature sensor 62, the supercharging/atmospheric pressure sensor 64, the atmospheric temperature sensor 68, and the vehicle speed sensor are connected to an electronic control unit (ECU) 70. The data detected by the sensors is input to the ECU 70. In correspondence with the data input by the sensors, the ECU 70 outputs a control signal to the VRV 42 and the EGR valve 50. The ECU 70 corresponds to the controller in the illustrated embodiment. The ECU 70 has transient state determining means, VN opening degree setting means, and other means.

Control of supercharging pressure by the ECU 70 in the diesel engine will hereafter be explained. In the following, the target opening degree of the variable vanes 36 of the turbocharger 30 is calculated by the ECU 70. Based on the results of calculation, the VRV 42 is controlled in such a manner that the opening degree of the variable vanes 36 becomes a desirable value.

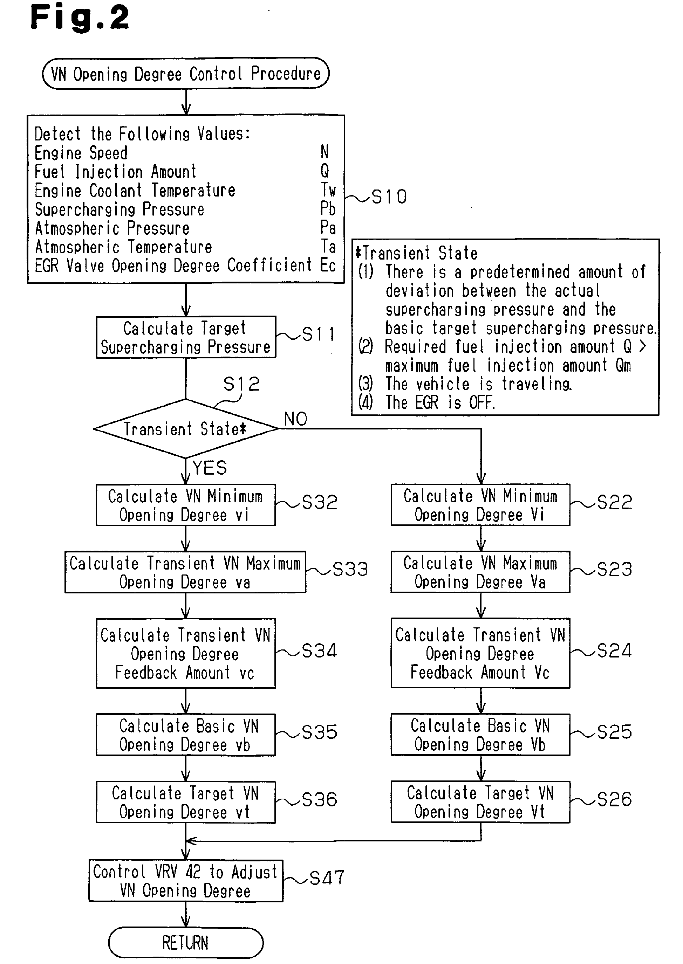

As illustrated in Fig. 2, in step S10, the ECU 70 reads various types of data and detects the engine speed N, the fuel injection amount Q, the engine coolant temperature Tw, the supercharging pressure Pb, the atmospheric pressure Pa, the atmospheric temperature Ta, and the EGR valve opening degree coefficient Ec. The fuel injection amount Q refers to the fuel injection amount corresponding to the depression amount of the accelerator pedal. The fuel injection amount Q is read out from the ECU 70 as data of a control amount of the injection nozzle. The EGR valve opening degree coefficient Ec is read out from the ECU 70 as data of a control amount of the actuator of the EGR valve 50. The EGR valve opening degree coefficient Ec is set to, for example, 0 to 1 in correspondence with the opening degree of the EGR valve 50 (0 when the EGR valve 50 is fully closed and 1 when the EGR valve 50 is fully open).

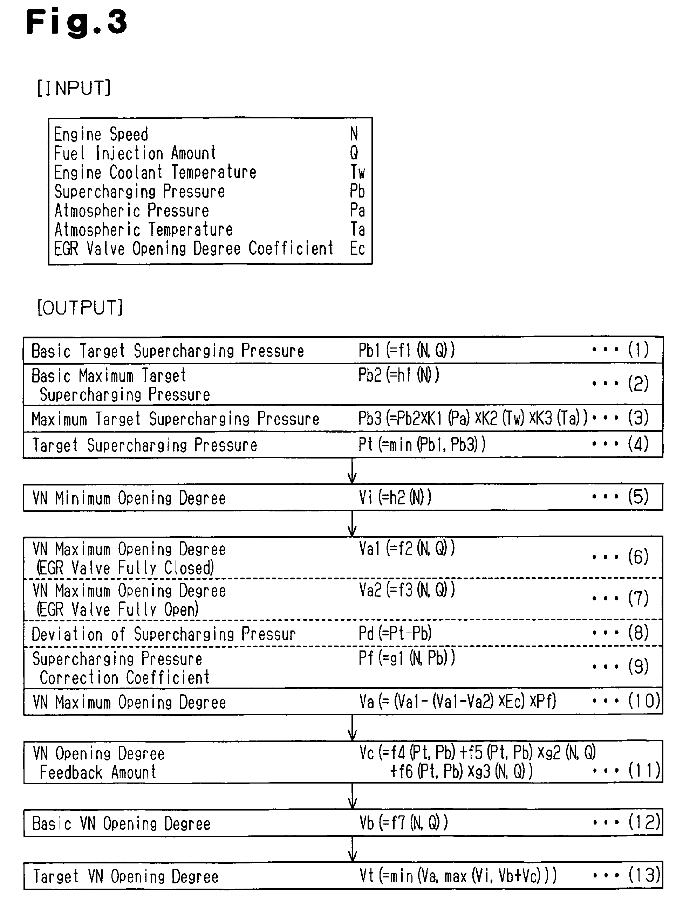

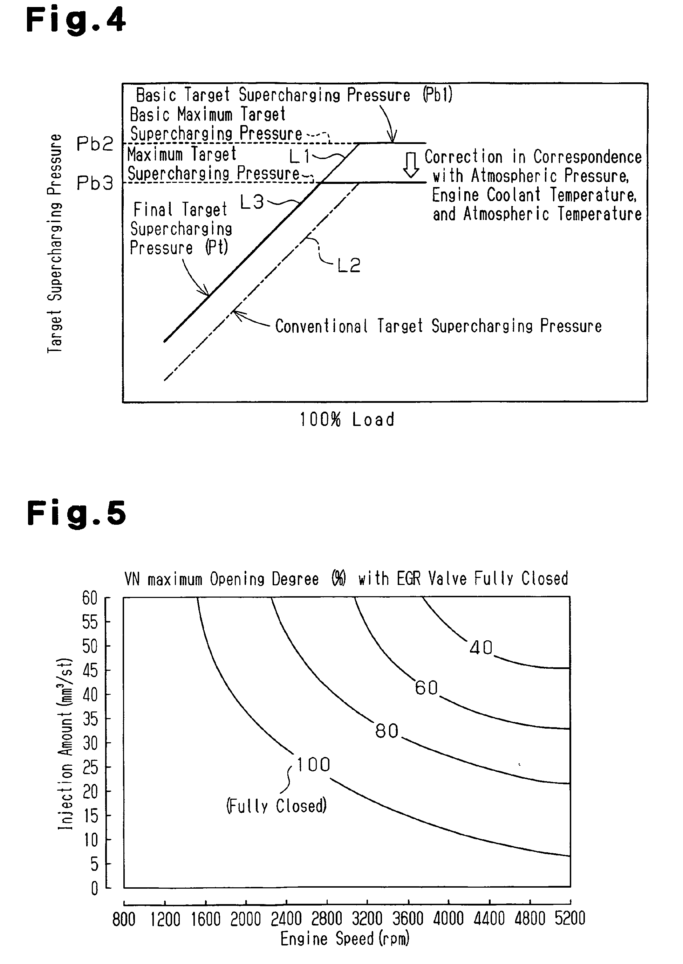

Then, based on data obtained through such detection, the target supercharging pressure Pt is calculated in step S11 of Fig. 2. The target supercharging pressure Pt is set using the equation (4) of Fig. 3 and in correspondence with the minimum values of the basic target supercharging pressure Pb1 and the maximum target supercharging pressure Pb3. The basic target supercharging pressure Pb1 is set in accordance with a map obtained from the engine speed N and the fuel injection amount Q (see the equation (1) of Fig. 3). The maximum target supercharging pressure Pb3 is set through correction of the basic maximum target supercharging pressure Pb2 (see the equation (2) of Fig. 3), which is the maximum value (the maximum guard) of the basic target supercharging pressure Pb1, in correspondence with the atmospheric pressure Pa, the engine coolant temperature Tw, and the atmospheric temperature Ta (see the equation (3) of Fig. 3). A method for calculating the target supercharging pressure Pt will hereafter be explained with reference to Fig. 4.

Referring to Fig. 4, the basic target supercharging pressure Pb1, which is indicated by the line L1 in Fig. 4, is set in correspondence with the correlation between the engine load (the engine speed N, the fuel injection amount Q) and the target supercharging pressure. From the viewpoints of limitations to the rotation number of the turbine 32 and the in-cylinder pressure of the engine, the basic maximum target supercharging pressure Pb2, or the maximum guard of the basic target supercharging pressure Pb1, is set in the range in which the engine load is greater than 100%. Then, based on the basic target supercharging pressure Pb1 and the basic maximum target supercharging pressure Pb2, the target supercharging pressure Pt is then corrected in correspondence with the atmospheric pressure Pa, the engine coolant temperature Tw, and the atmospheric temperature Ta. In this manner, the corrected target supercharging pressure Pt is set.

Subsequently, in step S12 of Fig. 2, it is determined whether the diesel engine is in the transient state. Such determination is positive if the following conditions are satisfied.
(1) There is a predetermined deviation between the actual supercharging pressure and the basic target supercharging pressure, which is determined in correspondence with the operating state of the diesel engine.
(2) The required fuel injection amount Q determined through the driver's operation of the accelerator exceeds the maximum fuel injection amount Qm. Determination whether the condition (2) is met is carried out through detection of the required fuel injection amount from the map of the fuel injection amount with respect to the operating amount (the depression amount) of the accelerator pedal and subsequent comparison between the required fuel injection amount and the predetermined maximum fuel injection amount.
(3) The vehicle is in a traveling state. Determination whether the condition (3) is met is based on a detection signal generated by, for example, the vehicle speed sensor.
(4) The EGR valve 50 is closed and the exhaust recirculation is in a deactivated state (EGR/OFF). Determination whether the condition (4) is met is based on the state of the actuator (not shown) of the EGR valve 50.

If it is determined that the diesel engine is not in the transient state but in the normal state in step S12, the opening degree of the variable vanes 36 is controlled in accordance with step S22 and the following steps. If it is determined that the diesel engine is in the transient state in step S12, the opening degree of the variable vanes 36 is controlled in accordance with step S32 and the following steps. In the following, control of the opening degree of the variable vanes 36 will be explained first for the normal state and then for the transient state.

### [Control of Opening Degree of Variable Vanes 36 in Normal State]

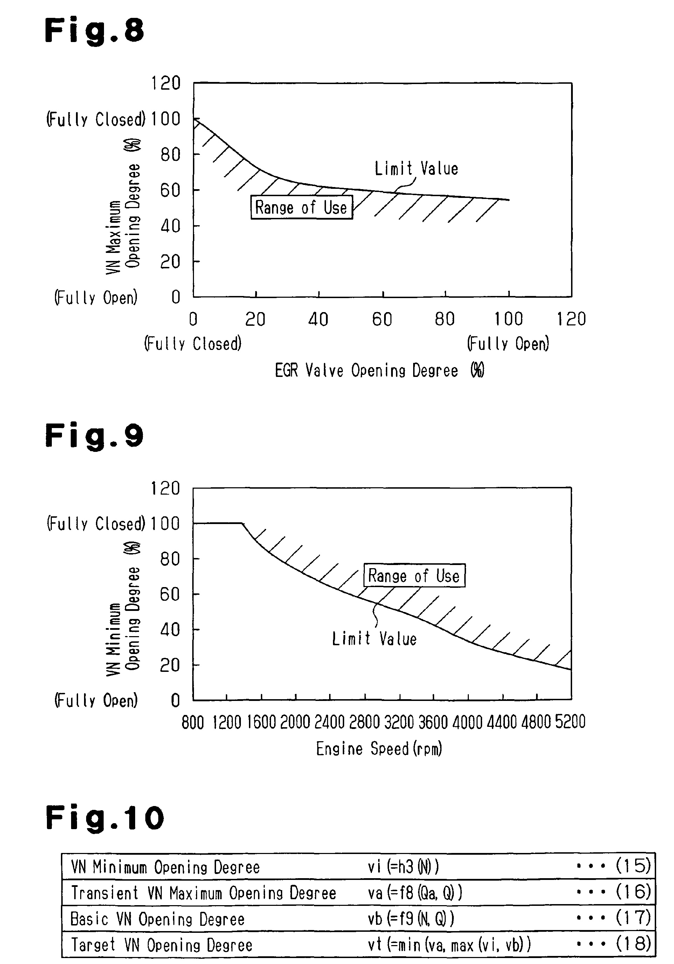

If it is determined that the engine is in the normal state in step S12 of Fig. 2, the VN minimum opening degree Vi in accordance with which the opening degree of the variable vanes 36 is increased is calculated in step S22. The VN minimum opening degree Vi is set in accordance with a map obtained in correspondence with the engine speed N (see Fig. 9) and using the equation (5) in Fig. 3. Referring to Fig. 9, in the illustrated embodiment, the limit value indicated by the solid line in the graph is set for the correlation between the engine speed N (rpm) and the VN minimum opening degree Vi (%). The range above the limit value in the graph is set as the range of use. Further, in the graph, 0(%) of the VN minimum opening degree Vi corresponds to the fully open state of the variable vanes 36 and 100(%) of the VN minimum opening degree Vi corresponds to the fully closed state of the variable vanes 36.

Specifically, when the accelerator pedal is released, the remaining supercharging pressure causes the actual supercharging pressure to exceed the target supercharging pressure. The VN opening degree is thus adjusted to increase. However, since the limit value is set for the VN minimum opening degree Vi of the variable vanes 36 in accordance with which the opening degree of the variable vanes 36 is increased, rise of supercharging pressure is promoted when the engine is reaccelerated. This ensures reaccelerating performance.

Next, in step S23 in Fig. 2, the VN maximum opening degree Va in accordance with which the opening degree of the variable vanes 36 is decreased is calculated. The VN maximum opening degree Va is set using the equations (6) to (10) in Fig. 3. That is, the VN maximum opening degree Va1 in the fully closed state of the EGR valve 50 and the VN maximum opening degree Va2 in the fully open state of the EGR valve 50 are obtained (see the equations (6) and (7) in Fig. 3). Then, based on the EGR valve opening degree coefficient Ec, the VN maximum opening degree Va at a given opening degree of the EGR valve 50 is determined (see the equation (10) in Fig. 3).

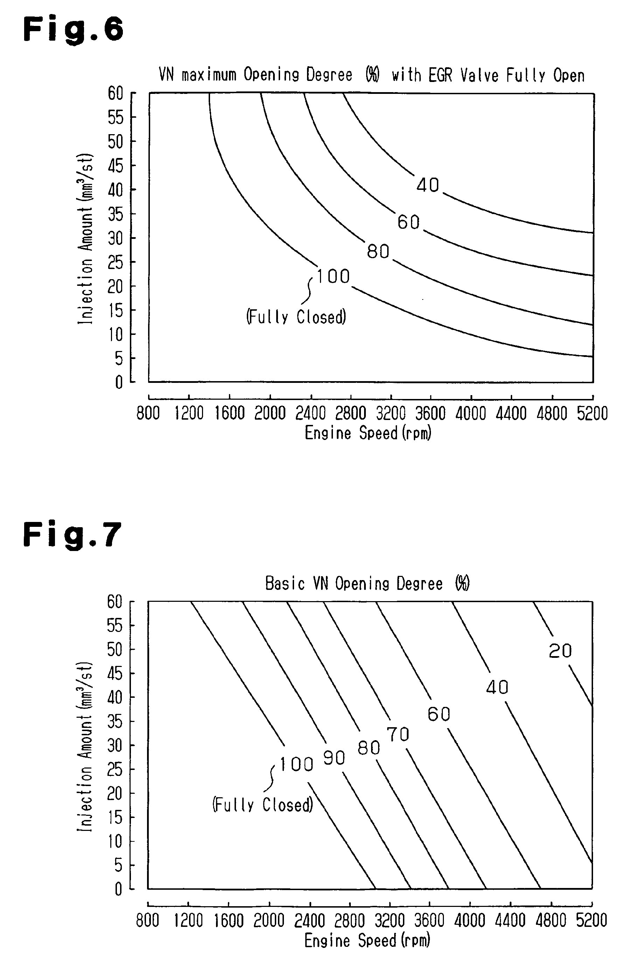

Specifically, the VN maximum opening degrees Va1 and Va2 are set in accordance with a map obtained in correspondence with the engine speed N and the fuel injection amount Q (see Figs. 5 and 6).

In other words, the VN maximum opening degree Va1 (%) and the VN maximum opening degree Va2 (%) are each set in correspondence with the engine speed N (rpm) and the fuel injection amount Q (mm³/st). These values become 100(%) when the variable vanes 36 are fully closed.

The supercharging pressure correction coefficient Pf is obtained in accordance with the map (see the equation (9) in Fig. 3) determined in correspondence with the engine speed N and the supercharging pressure deviation Pd (see the equation (8) in Fig. 3) between the target supercharging pressure Pt and the actual supercharging pressure Pb.

This results in a correlation between the EGR valve opening degree (%) and the VN maximum opening degree Va (%), as is represented in Fig. 8. In such a correlation, the limit value is provided as represented by the solid line in Fig. 8 and the range below the limit value in the graph is set as the range of use. In the graph, 0(%) of the VN maximum opening degree Va corresponds to the fully open state of the variable vanes 36 and 100(%) of the VN maximum opening degree Va corresponds to the fully closed state of the variable vanes 36. 0(%) of the EGR valve opening degree corresponds to the fully closed state and 100(%) of the EGR valve opening degree corresponds to the fully open state.

In this manner, through setting of the limit value for the VN maximum opening degree Va of the variable vanes 36 in accordance with which the opening degree of the variable vanes 36 is decreased, excessive flow of exhaust gas into the exhaust recirculation line 24 is suppressed and release of black smoke from the exhaust system is maximally prevented in the transient state, in which the variable vanes 36 are controlled in such a manner that the actual supercharging pressure becomes the target supercharging pressure. Also, through setting of such limit value, the supercharging pressure is prevented from excessively increasing when, for example, the EGR valve 50 is held in the fully closed state. This prevents overshoot of the rotation number of the turbine 32.

Next, in step S24 in Fig. 2, the VN opening degree feedback amount Vc is calculated. As represented by the equation (11) in Fig. 3, the VN opening degree feedback amount Vc is determined through addition of a proportional (a first term), an integral (a second term), and a differential (a third term). Each of the terms is set in accordance with a map determined in correspondence with the engine speed N, the fuel injection amount Q, the target supercharging pressure Pt, and the actual supercharging pressure Pb. The gain of the integral (the second term) and the gain of the differential (the third term) are changeable in correspondence with the coefficient g2(N, Q) and the coefficient g3(N, Q), respectively. Thus, when the engine speed N, the fuel injection amount Q, the target supercharging pressure Pt, and the actual supercharging pressure Pb change, the VN opening degree feedback amount Vc is corrected to an optimal value in correspondence with the operating condition of the diesel engine (the engine load, the rotation number of the turbine, and the supercharging pressure). Such correction prevents, for example, excessive rotation of the turbine 32. As a result, control of the supercharging pressure is performed in a satisfactory manner compared to the case in which the gains of the proportional and the differential are set as fixed values.

Subsequently, in step S25 in Fig. 2, the basic VN opening degree Vb is calculated (see the equation (12) in Fig. 3). The basic VN opening degree Vb is set in accordance with the map determined in correspondence with the engine speed N and the fuel injection amount Q (see Fig. 7). With reference to Fig. 7, the basic VN opening degree Vb (%) is set in correspondence with the engine speed N (rpm) and the fuel injection amount Q (mm³/st). In the graph, the line indicated as 100(%) corresponds to the fully closed state of the variable vanes 36.

Then, in step S26 in Fig. 2, the target VN opening degree Vt is calculated. The target VN opening degree Vt is set in correspondence with the VN minimum opening degree Vi, the VN maximum opening degree Va, the VN opening degree feedback amount Vc, and the basic VN opening degree Vb, which have been obtained in steps S22 to S25 (see the equation (13) in Fig. 3). Specifically, the VN minimum opening degree Vi is compared with the sum of the basic VN opening degree Vb and the VN opening degree feedback amount Vc and the greater value is selected. The selected opening degree is then compared with the VN maximum opening degree Va and the smaller value is set as the target VN opening degree Vt. The target VN opening degree Vt corresponds to the VN opening degree command value for the normal state.

Next, in step S47, the VRV 42 is controlled in such a manner that the target VN opening degree Vt is achieved.

### [Control of VN Opening Degree of Variable Vanes 36 in Transient State]

If it is determined that the diesel engine is in the transient state in step S12 in Fig. 2, the VN minimum opening degree *vi* for the transient state is calculated in step S32. The VN minimum opening degree *vi* is set using the equation (15) in Fig. 10 and in accordance with a map for the transient state determined in correspondence with the engine speed N.

Then, in step S33 in Fig. 2, the VN maximum opening degree *va* in the transient state is calculated. The VN maximum opening degree *va* is set using the equation (16) in Fig. 10 and in accordance with a map for the transient state determined in correspondence with the air intake amount Qa and the fuel injection amount Q. That is, the fuel injection amount Q and the air intake amount Qa are used as parameters of the map in the transient state for obtaining the VN maximum opening degree *va.* This allows accurate estimation of the exhaust energy in the transient state in which supercharging is delayed and the back pressure and the exhaust temperature are low compared to the normal state. In this manner, the optimal VN opening degree corresponding to the exhaust energy is instructed. If the fuel injection amount Q and the engine speed are used as the parameters of the map in the transient state for obtaining the VN maximum opening degree *va,* the map values must be set at maximally severe conditions of acceleration or shifting with respect to the upper limit of the back pressure or the turbo speed for ensuring the hardware reliability. Thus, the optimal VN opening degree for the transient state cannot be obtained. However, if the fuel injection amount Q and the air intake amount Qa are used as the above-described parameters, control is performed with the optimal VN opening degree in rapid acceleration through depression of the accelerator pedal. This improves response of supercharging and thus response of acceleration.

The map for determining the VN maximum opening degree is used when the EGR is not employed. The map is thus non-related to the equations (6) and (7) in Fig. 3. The air intake amount Qa is detected through a hot-wire flowmeter (not shown) provided in the intake passage 22. The fuel injection amount Q is calculated from an output value of an accelerator position sensor, which detects the depression amount of the accelerator pedal. Alternatively, the air intake amount Qa is replaced by the amount of the exhaust gas in the exhaust passage 20.

Then, in step S35 in Fig. 2, the basic VN opening degree *vb* is calculated (see the equation (17) in Fig. 10). The basic VN opening degree *vb* is set in accordance with a map determined in correspondence with the engine speed N and the fuel injection amount Q.

Subsequently, the target VN opening degree vt for the transient state is calculated in step S36 in Fig. 2. The target VN opening degree *vt* is set in correspondence with the VN minimum opening degree *vi*, the VN maximum opening degree *va,* and the basic VN opening degree *vb*, which have been obtained in steps S32, S33, and S35 (see the equation (18) in Fig. 3). Specifically, the VN minimum opening degree *vi* is compared with the basic VN opening degree *vb* and the greater value is selected. The selected opening degree is then compared with the VN maximum opening degree *va* for the transient state and the smaller value is set as the target VN opening degree *vt*. The target VN opening degree *vt* corresponds to the VN opening degree command value for the transient state. Through adjustment of a feedback gain for the transient state, the target VN opening degree vt becomes the VN maximum opening degree *va* for the transient state, which is the optimal VN opening degree in the transient state.

Next, in step S47, the VRV 42 is controlled in such a manner that the target VN opening degree *vt* is achieved.

If the transient state determining means determines that the internal combustion engine is in the transient state in the controller for the variable vane turbocharger, which has been described, the variable vanes 36 are controlled in accordance with the target VN opening degree *vt* for the transient state, which is set in correspondence with the exhaust energy obtained from the air intake amount representing the flow rate of the exhaust and the fuel injection amount. Thus, when the internal combustion engine is in the transient state, the VN opening degree of the variable vanes 36 is quickly adjusted to decrease, compared to the normal state, so that the optimal VN opening degree is achieved. This improves response of supercharging and thus the accelerating performance.

Further, the target VN opening degree *vt* for the transient state is set in correspondence with the exhaust energy, which is determined from the air intake amount representing the flow rate of the exhaust and the fuel injection amount. This enhances the response of supercharging and thus the control accuracy, compared to the technique described in Patent Document 1, which sets the target VN opening degree for the transient state based on the air intake amount.

The transient state determining means (ECU 70) determines that the internal combustion engine is in the transient state if there is a predetermined amount of deviation between the actual supercharging pressure and the basic target supercharging pressure, which is obtained in correspondence with the operating state of the engine, and the required fuel injection amount determined through operation of the accelerator exceeds the maximum fuel injection amount. That is, the transient state determining means determines that the engine is not in the transient state but in the normal state if the deviation between the actual supercharging pressure and the basic target supercharging pressure, which is obtained in correspondence with the operating state of the engine, is less than the predetermined amount and the required fuel injection amount determined through operation of the accelerator is less than the maximum fuel injection amount. This prevents excessive rise of the supercharging pressure.

The condition that the vehicle is traveling must be additionally satisfied to cause the transient state determining means to determine that the internal combustion engine is in the transient state. In this manner, excessive rise of the supercharging pressure in the engine when the vehicle is stopped, which is gunning of the engine, is avoided.

Also, the condition that the EGR valve 50 is closed must be met to cause the transient state determining means to determine that the internal combustion engine is in the transient state. This suppresses generation of smoke in the exhaust gas caused by excessive rise of the back pressure of the engine when the EGR valve 50 is maintained open.

The present invention is not restricted to the illustrated embodiment but may be modified without departing from the scope of the invention. For example, although the supercharging pressure control of the illustrated embodiment is carried out on the diesel engine, the present invention may be employed in various types of engines other than the diesel engines, such as, particularly, a lean burn engine causing a relatively great exhaust amount of unburned elements compared to other gasoline engines. Further, the present invention may be used in an internal combustion engine that includes neither the exhaust recirculation line 24 nor the EGR valve 50 (see Fig. 1). Also, in the determination whether the engine is in the transient state (see step S12 in Fig. 2), the determination whether the vehicle is in the traveling state and/or the determination whether the EGR is in the deactivated state may be omitted. Further, instead of the comparison between the required fuel injection amount Q and the maximum fuel injection amount Qm for the determination whether the engine is in the transient state (see step S12 in Fig. 2), the supercharging pressure Pb obtained in step S10 may be compared with the basic target supercharging pressure Pb1 (see the equation (1) in Fig. 3). In this case, it is determined whether the engine is in the transient state depending on whether the difference between the absolute value of the supercharging pressure Pb and the absolute value of the basic target supercharging pressure Pb1 is greater than or equal to a set value ΔP.

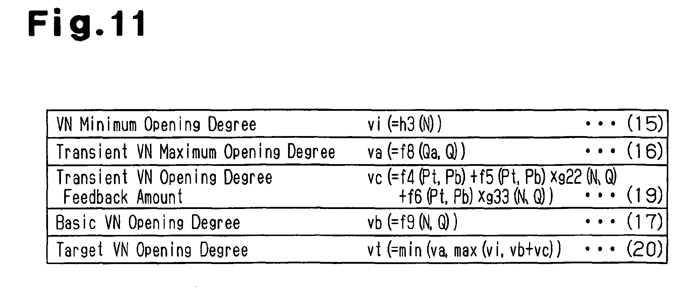

When the VRV 42 is controlled in such a manner that the target VN opening degree vt is achieved in the transient state, calculation of the VN opening degree feedback amount vc for the transient state, which is represented in step S34 in Fig. 2, may be performed between step S33 and step S35. In this case, as represented by the equation (19) in Fig. 11, the VN opening degree feedback amount vc is represented by an equation substantially equivalent to the equation (11) in Fig. 10. However, since the engine is in the transient state, the gain coefficient of the integral (the second term) and the gain coefficient of the differential (the third term) are changed to g22 and g33, respectively. The gain coefficients g22, g33 may be fixed as the values corresponding to the operating condition (the engine load, the rotation number of the turbine, and the supercharging pressure) of the diesel engine in the transient state. Alternatively, the gain coefficients g22, g33 may be optimized in correspondence with the time that has elapsed. In this case, instead of using the equation (18) in Fig. 10, the target VN opening degree *vt* is set in correspondence with the VN minimum opening degree *vi,* the VN maximum opening degree *va* for the transient state, the VN opening degree feedback amount *vc,* and the basic VN opening degree *vb* (see the equation (20) in Fig. 11). Specifically, the VN minimum opening degree *vi* (see the equation (15) in Fig. 11) is compared with the sum of the basic VN opening degree *vb* (see the equation (17) in Fig. 11) and the VN opening degree feedback amount vc (see the equation (19) in Fig. 11) and the greater value is selected. The selected opening degree is then compared with the VN maximum opening degree *va* for the transient state and the smaller value is set as the target VN opening degree *vt*.

## Claims

1. A controller for a variable vane turbocharger (30), the turbocharger (30) including:
a turbine (32) arranged in an exhaust passage (20) of an internal combustion engine of a vehicle;
a compressor (34) that is provided in an intake passage (22) of the engine and supplies air to the engine in correspondence with drive torque produced by the turbine (32); and
a variable vane (36) that selectively opens and closes to change the flow rate of exhaust gas that drives the turbine (32), the controller being **characterized by**:
transient state determining means (70) that determines whether the engine is in a transient state; and
VN opening degree setting means (70) wherein when the transient state determining means (70) determines that the engine is in the transient state, the VN opening degree setting means (70) sets a VN opening degree command value (Vt) by selecting a smaller value between a VN maximum opening degree (va) in the transient state and a greater value of a VN minimum opening degree (vi) in the transient state and a basic VN opening degree (vb) in the transient state, the VN maximum opening degree (va) being determined in correspondence with an air intake amount (Qa) representing a flow rate of the exhaust gas and a fuel injection amount (Q), the VN minimum opening degree (vi) determined in correspondence with an engine speed (N), and the basic VN opening degree (vb) determined in correspondence with the engine speed (N) and the fuel injection amount (Q), and wherein when the transient state determining means (70) determines that the engine is not in the transient state but in the normal state, the VN opening degree setting means (70) sets a VN opening degree command value by using a VN maximum opening degree (Va) determined in correspondence with an engine speed (N) and a fuel injection amount (Q),
wherein the opening degree of the variable vane is controlled in correspondence with the VN opening degree command value (Vt) set by the VN opening degree setting means.

2. The controller according to claim 1, wherein the transient state determining means (70) determines that the internal combustion engine is in the transient state when a first condition and a second condition are both satisfied, the first condition being that there is a predetermined amount of deviation between an actual supercharging pressure and a basic target supercharging pressure obtained in correspondence with the operating state of the engine, and the second condition being that a required fuel injection amount (Q) determined through operation of an accelerator exceeds a maximum fuel injection amount (Qm).

3. The controller according to claim 2, wherein the transient state determining means (70) determines that the internal combustion engine is in the transient state when, in addition to the first and second conditions, a third condition that the vehicle is traveling is satisfied.

4. The controller according to claim 3, wherein the internal combustion engine has an exhaust recirculation line (24) through which the exhaust gas is recirculated from the exhaust passage (20) to the intake passage (22) and an adjustment valve(50) that selectively opens and closes to adjust the amount of the recirculated exhaust gas in the exhaust recirculation line (24), wherein the transient state determining means (70) determines that the internal combustion engine is in the transient state when, in addition to the first to third conditions, a fourth condition that the adjustment valve (50) is closed is satisfied.

5. The controller according to claim 2, wherein the internal combustion engine has an exhaust recirculation line (24) through which the exhaust gas is recirculated from the exhaust passage (20) to the intake passage (22) and an adjustment valve(50) that selectively opens and closes to adjust the amount of the recirculated exhaust gas in the exhaust recirculation line (24), wherein the transient state determining means (70) determines that the internal combustion engine is in the transient state when, in addition to the first and second conditions, a third condition that the adjustment valve (50) is closed is satisfied.

## Patentansprüche

1. Steuervorrichtung für einen Turbolader (30) mit variablen Flügeln, wobei der Turbolader (30) hat:
eine Turbine (32), die in einem Abgasdurchtritt (20) einer Brennkraftmaschine eines Fahrzeugs angeordnet ist;
einen Verdichter (34), der in einem Einlassdurchtritt (22) der Maschine bereitgestellt ist und Luft entsprechend einem durch die Turbine (32) erzeugten Antriebsmoment zu der Maschine zuführt; und
einem variablen Flügel (36), der ausgewählt öffnet und schließt, um die Strömungsrate des Abgases zu ändern, das die Turbine (32) antreibt, wobei die Steuervorrichtung **gekennzeichnet ist durch**:
ein Übergangszustandbestimmungsmittel (70), das bestimmt, ob die Maschine sich in einem Übergangszustand befindet; und
ein VN-Öffnungsgradeinstellmittel (70), wobei, wenn das Übergangszustandbestimmungsmittel (70) bestimmt, dass die Maschine sich in dem Übergangszustand befindet, das VN-Öffnungsgradeinstellmittel (70) einen VN-Öffnungsgradbefehlswert (Vt) **durch** Auswählen eines kleineren Werts zwischen einem VN-Maximumöffnungsgrad (va) in dem Übergangszustand und einem größeren Wert eines VN-Minimumöffnungsgrads (vi) in dem Übergangszustand und eines Basis-VN-Öffnungsgrads (vb) in dem Übergangszustand auswählt, wobei der VN-Maximumöffnungsgrad (va) gemäß einer Lufteinlassmenge (Qa), die eine Strömungsrate des Abgases darstellt, und einer Kraftstoffeinspritzmenge (Q) bestimmt ist, der VN-Minimumöffnungsgrad (vi) entsprechend einer Maschinendrehzahl (N) bestimmt ist, und der Basis-VN-Öffnungsgrad (vb) entsprechend der Maschinendrehzahl (N) und der Kraftstoffeinspritzmenge (Q) bestimmt ist, und wobei, wenn das Übergangszustandbestimmungsmittel (70) bestimmt, dass die Maschine sich nicht in dem Übergangszustand befindet, sondern in dem normalen Zustand befindet, das VN-Öffnungsgradeinstellmittel (70) einen VN-Öffnungsgradbefehlswert unter Verwendung eines VN-Maximumöffnungsgrads (Va) einstellt, der gemäß einer Maschinendrehzahl (N) und einer Kraftstoffeinspritzmenge (Q) bestimmt wird,
wobei der Öffnungsgrad des variablen Flügels entsprechend dem VN-Öffnungsgradbefehlswert (Vt) gesteuert wird, der **durch** das VN-Öffnungsgradeinstellmittel eingestellt wurde.

2. Steuervorrichtung nach Anspruch 1, wobei das Übergangszustandbestimmungsmittel (70) bestimmt, dass die Brennkraftmaschine sich in dem Übergangszustand befindet, wenn sowohl eine erste Bedingung als auch eine zweite Bedingung erfüllt sind, wobei die erste Bedingung derart ist, dass eine vorbestimmte Größe einer Abweichung zwischen einem tatsächlichen Ladedruck und einem Basissollladedruck vorhanden ist, der in Entsprechung mit dem Betriebszustand der Maschine erhalten wird, und die zweite Bedingung derart ist, dass eine erforderliche Kraftstoffeinspritzmenge (Q), die durch die Betätigung eines Beschleunigers bestimmt ist, eine maximale Kraftstoffeinspritzmenge (Qm) überschreitet.

3. Steuervorrichtung nach Anspruch 2, wobei das Übergangszustandbestimmungsmittel (70) bestimmt, dass die Brennkraftmaschine sich in dem Übergangszustand befindet, wenn, zusätzlich zu den ersten und zweiten Bedingungen, eine dritte Bedingung erfüllt ist, dass das Fahrzeug fährt.

4. Steuervorrichtung nach Anspruch 3, wobei die Brennkraftmaschine eine Abgasrückführleitung (24) hat, durch die das Abgas von dem Abgasdurchtritt (20) zu dem Einlassdurchtritt (22) zurückgeführt wird, und ein Anpassungsventil (50), das ausgewählt öffnet und schließt, um die Menge des zurückgeführten Abgases in der Abgasrückführleitung (24) anzupassen, wobei das Übergangszustandbestimmungsmittel (70) bestimmt, dass die Brennkraftmaschine sich in dem Übergangszustand befindet, wenn zusätzlich zu den ersten bis dritten Bedingungen eine vierte Bedingung erfüllt ist, dass das Anpassungsventil (50) geschlossen ist.

5. Steuervorrichtung nach Anspruch 2, wobei die Brennkraftmaschine eine Abgasrezirkulationsleitung (24) hat, durch die das Abgas von dem Abgasdurchtritt (20) zu dem Einlassdurchtritt (22) rückgeführt wird, und ein Anpassungsventil (50), das ausgewählt öffnet und schließt, um die Menge des rückgeführten Abgases in der Abgasrückführleitung (24) anzupassen, wobei das Übergangszustandbestimmungsmittel (70) bestimmt, dass die Brennkraftmaschine sich in dem Übergangszustand befindet, wenn zusätzlich zu der ersten und der zweiten Bedingung eine dritte Bedingung erfüllt ist, dass das Anpassungsventil (50) geschlossen ist.

## Revendications

1. Dispositif de commande pour un turbocompresseur à aubes variables (30), le turbocompresseur (30) comportant :
une turbine (32) disposée dans un passage d'échappement (20) d'un moteur à combustion interne d'un véhicule ;
un compresseur (34) qui est prévu dans un passage d'admission (22) du moteur et qui fournit de l'air au moteur en correspondance avec un couple d'entraînement produit par la turbine (32) ; et
une aube variable (36) qui s'ouvre et se ferme sélectivement pour modifier le débit du gaz d'échappement qui actionne la turbine (32), le dispositif de commande étant **caractérisé par** :
un moyen (70) de détermination d'état transitoire qui détermine si le moteur est dans un état transitoire ; et
un moyen (70) de réglage de degré d'ouverture VN où lorsque le moyen (70) de détermination d'état transitoire détermine que le moteur est dans l'état transitoire, le moyen (70) de réglage de degré d'ouverture VN établit une valeur de commande de degré d'ouverture VN (Vt) en sélectionnant une plus petite valeur entre un degré d'ouverture maximal VN (va) à l'état transitoire et une plus grande valeur d'un degré d'ouverture minimal VN (vi) à l'état transitoire et un degré d'ouverture de base VN (vb) à l'état transitoire, le degré d'ouverture maximal VN (va) étant déterminé en correspondance avec une quantité d'admission d'air (Qa) représentant un débit du gaz d'échappement et une quantité d'injection de carburant (Q), le degré d'ouverture minimal VN (vi) étant déterminé en correspondance avec une vitesse de moteur (N), et le degré d'ouverture de base VN (vb) étant déterminé en correspondance avec la vitesse de moteur (N) et la quantité d'injection de carburant (Q), et où lorsque le moyen (70) de détermination d'état transitoire détermine que le moteur n'est pas dans l'état transitoire mais dans l'état normal, le moyen (70) de réglage de degré d'ouverture VN établit une valeur de commande de degré d'ouverture VN en utilisant un degré d'ouverture maximal VN (Va) déterminé en correspondance avec une vitesse de moteur (N) et une quantité d'injection de carburant (Q),
où le degré d'ouverture de l'aube variable est commandé en correspondance avec la valeur de commande de degré d'ouverture VN (Vt) établie par le moyen de réglage de degré d'ouverture VN.

2. Dispositif de commande selon la revendication 1, dans lequel le moyen (70) de détermination d'état transitoire détermine que le moteur à combustion interne est à l'état transitoire lorsqu'une première condition et une deuxième condition sont toutes deux satisfaites, la première condition étant qu'il existe une quantité prédéterminée de déviation entre une pression de suralimentation réelle et une pression de suralimentation cible de base obtenue en correspondance avec l'état de fonctionnement du moteur, et la deuxième condition étant qu'une quantité d'injection de carburant requise (Q) déterminée par l'actionnement d'un accélérateur dépasse une quantité d'injection de carburant maximale (Qm).

3. Dispositif de commande selon la revendication 2, dans lequel le moyen (70) de détermination d'état transitoire détermine que le moteur à combustion interne est à l'état transitoire lorsque, en plus des première et deuxième conditions, une troisième condition où le véhicule se déplace est satisfaite.

4. Dispositif de commande selon la revendication 3, dans lequel le moteur à combustion interne possède une conduite de recirculation d'échappement (24) à travers laquelle le gaz d'échappement est recirculé depuis le passage d'échappement (20) jusqu'au passage d'admission (22) et une soupape de réglage (50) qui s'ouvre et se ferme sélectivement pour ajuster la quantité du gaz d'échappement recirculé dans la conduite de recirculation d'échappement (24), où le moyen (70) de détermination d'état transitoire détermine que le moteur à combustion interne est à l'état transitoire lorsque, en plus de la première à la troisième conditions, une quatrième condition où la soupape de réglage (50) est fermée est satisfaite.

5. Dispositif de commande selon la revendication 2, dans lequel le moteur à combustion interne possède une conduite de recirculation d'échappement (24) à travers laquelle le gaz d'échappement est recirculé depuis le passage d'échappement (20) jusqu'au passage d'admission (22) et une soupape de réglage (50) qui s'ouvre et se ferme sélectivement pour ajuster la quantité du gaz d'échappement recirculé dans la conduite de recirculation d'échappement (24), où le moyen (70) de détermination d'état transitoire détermine que le moteur à combustion interne est à l'état transitoire lorsque, en plus des première et deuxième conditions, une troisième condition où la soupape de réglage (50) est fermée est satisfaite.
